# EUROPÄISCHE PATENTSCHRIFT

(11) **EP 0 843 319 B1**
(45) Veröffentlichungstag und Bekanntmachung des Hinweises auf die Patenterteilung: **29.12.1999**
(21) Anmeldenummer: 97119781.9
(22) Anmeldetag: 12.11.1997
(51) Int. Cl.: H01B 1/22, H01B 1/20, H01C 17/065, C08K 9/08

(54) **Paste für Einbrennschichten**
Paste for burn-in layer
Pâte pour des couches âptes à être cuites

(30) Priorität: 14.11.1996 DE 19647044
(43) Veröffentlichungstag der Anmeldung: 20.05.1998
(73) Patentinhaber: Degussa-Hüls Aktiengesellschaft, 60287 Frankfurt am Main (DE)
(72) Erfinder: Zuber, Ralf, Dr., 63762 Grossostheim (DE); Fehl, Knut, 36381 Schlüchtern-Ramholz (DE); Peter, Willi, 63825 Blankenbach (DE); Kasper, Elisabeth, 63128 Dretzenbach (DE)

(56) Entgegenhaltungen:
- EP-A- 0 272 665
- WO-A-96/03466

## Beschreibung

Die Erfindung betrifft eine Paste zur Herstellung von Einbrennschichten, insbesondere in der Mikroelektronik, bestehend aus feinen metallischen und/oder nichtmetallischen Pulvern und einem Bindemittel aus einer wasserlöslichen organischen Polymerverbindung und einem wasserlöslichen organischen Lösungsmittel.

Mit solchen Pasten werden im allgemeinen in Massenproduktionsverfahren Schaltkreise für die Mikroelektronik oder auch Heckscheibenheizungen für Automobile hergestellt. Dazu werden die Pasten auf entsprechende Substrate aufgebracht und bei Temperaturen von bis zu 200°C getrocknet, um flüchtige Bestandteile zu entfernen. Bei einem anschließenden Brennen bei bis zu 800°C werden alle weiteren organischen Substanzen entfernt und die Schicht verdichtet.

Pasten für die Herstellung von dicken Einbrennschichten mittels Siebdruckverfahren enthalten meist einen großen Anteil von organischen Lösungsmitteln und polymeren Bindern. Die verwendeten Lösungsmittel sind zum Teil gesundheitsschädlich. Bei der Verarbeitung der Pasten und beim Reinigen der verwendeten Gerätschaften sind deshalb besondere Arbeitsschutzmaßnahmen zu ergreifen. Außerdem werden beim Trocknen und Brennen der Schichten erhebliche Mengen an Lösungsmittel und organischen Pyrolyseprodukten freigesetzt, die ebenfalls gesundheitsschädlich sein können.

Eine solche siebdruckfähige Paste wird beispielsweise in der US-PS 5,242,623 beschrieben. Sie besteht aus feinverteilten, elektrisch leitfähigen Metallpulvern in einem organischen Binder, der aus mehreren organischen Polymerverbindungen, wie Polyacrylaten, Polyestern, Polyamiden, Polyvinylalkohol oder Ethylzellulose, in einem organischen Lösungsmittel, wie hochsiedende Alkohole oder Terpene, sich zusammensetzt.

Neuerdings ist man bestrebt, die Lösungsmittel zumindest teilweise durch Wasser zu ersetzen, um die gesundheitsschädlichen Stoffe zu minimieren und um Pastenrückstände mit Wasser entfernen zu können.

Die US-PS 5,492,653 beschreibt eine Paste zum Aufbringen von elektrisch leitfähigen Schichten auf Unterlagen in der Elektronik, bestehend aus Silberplättchen, einer wasserlöslichen Polymerverbindung, insbesondere einer Polyacrylverbindung, Wasser und einem wasserlöslichen organischen Lösungsmittel, wie aliphatische Alkohole mit 6 bis 18 C-atome, deren Siedepunkt höher ist als der von Wasser. Diese Paste ist allerdings nicht für den Siebdruck geeignet und entwickelt beim Einbrennen gesundheitsschädliche Pyrolyseprodukte.

Das in der US-5,492,653 angewendete Sprühverfahren ist dem Siebdruckverfahren hinsichtlich Produktqualität deutlich unterlegen. Dies gilt besonders hinsichtlich Konturschärfe und Oberflächenrauhigkeit. Höhere Anforderungen können hier nur mit dem Siebdruckverfahren erfüllt werden.

Eine Siebdruckpaste auf Wasserbasis wird auch in der WO 9603466 beschrieben. Durch den Einsatz von alkaliquellbaren Polymer bindern wird die Rheologie der Pasten für Siebdruckanwendungen eingestellt. Aufgrund der hohen Flüchtigkeit des Hauptlösungsmittels Wasser wird jedoch die Verarbeitungsdauer stark eingeschränkt. Die Paste trocknet ein und ein kontinuierlicher Einsatz in einem Massenproduktionsverfahren ist dadurch nicht möglich.

Deshalb sind Siebdruckpasten mit schwerflüchtigen organischen Lösungsmitteln immer noch in Gebrauch.

Auch für andere Anwendungen, die eine Beibehaltung der rheologischen Eigenschaften über eine längere Prozeßdauer trotz Verarbeitung an Raumluft erfordern, wie zum Beispiel bei der Kantenmetallisierung von Kondensatoren, ist Wasser als Hauptlösungsmittel ungeeignet.

Eine Paste gemäß EP-A-0 630 031 ist daher zwar mit Wasser entfernbar, enthält aber als Lösungsmittel organische Flüssigkeiten, deren Verdunstungsraten mindestens um den Faktor 2 kleiner sind als die von Wasser. Sie enthält daher vorzugsweise höhere Glycole als Lösungsmittel und als Bindemittel Polyvinylpyrrolidone und Polysaccharide. Diese Pasten haben den Nachteil, daß sie bei fortschreitender Lagerdauer einen festen Bodensatz bilden, der nicht mehr aufgerührt werden kann.

Es war daher Aufgabe der vorliegenden Erfindung, eine Paste zur Herstellung von Einbrennschichten, insbesondere in der Mikroelektronik, zu entwickeln, bestehend aus feinen metallischen und/oder nichtmetallischen Pulvern und einem Bindemittel aus einer wasserlöslichen organischen Polymerverbindung und einem wasserlöslichen organischen Lösungsmittel, die auch bei längerer Lagerzeit sich nicht absetzt bzw. aufgerührt werden kann, und die beim Trocknen und Einbrennen möglichst wenige gesundheitsschädlichen Zersetzungsprodukte bildet.

Diese Aufgabe wird erfindungsgemäß dadurch gelöst, daß als organische Polymerverbindung ein Polyethylenimin in einer Menge von 0,3 bis 3 Gew.%, bezogen auf das Gesamtgewicht der Paste, eingesetzt wird.

Vorzugsweise enthält die Paste 0,4 bis 0,9 Gew.% Polyethylenimin.

Als organisches Lösungsmittel enthält die Paste vorteilhafterweise 8 bis 17 Gew.% Polyalkohole, die bis zu 40 % durch Wasser ersetzt sein können. Als Polyalkohole haben sich insbesondere Glycole (Diole) und Glycerin bewährt.

Die verwendeten Alkohole und die Polyethylenimine sind nicht gesundheitsschädlich. Die Verwendung von Polyethylenimin führt zu einer deutlichen Reduktion des erforderlichen Polymer- und Lösungsmittelgehalts in der Paste, ohne die für das Siebdruckverfahren notwendigen Eigenschaften zu verschlechtern. Der Einsatz von Polyethylenimin gewährleistet überraschenderweise trotz geringer Menge eine gute Standfestigkeit und Sedimentationsstabilität der Pasten. Bei Scherung wird die Paste dünner und läßt sich trotz einem reduzierten Lösungsmittelanteil sehr gut im Siebdruckverfahren verarbeiten. Dadurch ergibt sich eine merkliche Reduzierung der bei der Verarbeitung freigesetzten Menge an organischen Lösungsmitteln und organischen Pyrolyseprodukten und auch eine verbesserte Leitfähigkeit der Einbrennschichten.

Besondere Vorteile ergeben sich auch hinsichtlich der Sedimentationseigenschaften der Pasten. Auch bei längerem Lagern kommt es nur zu einem leichten Absetzen von Feststoffanteilen, die Pasten können daher sehr leicht, zum Beispiel von Hand, wieder aufgerührt werden. Ein Zusatz von Antiabsetzmitteln ist nicht notwendig.

Die erfindungsgemäße Pastenzusammensetzung ist wasserwaschbar.

Beim Vorliegen geeigneter Verarbeitungsbedingungen, können Teile des Lösungsmittels und/oder Lösungsmittelgemischs durch Wasser ersetzt werden. Der Wasseranteil kann dabei bis zu 40 %, bevorzugt bis zu 10 % betragen. Auch damit ist bei der vorgesehenen Anwendung in Massenproduktionsverfahren eine deutliche Reduktion des Anteils an organischen Emissionen gegeben.

Folgende Beispiele sollen die Vorteile der erfindungsgemäßen Paste näher erläutern:

1. Entsprechend der in Tabelle 1 angegebenen Rezeptur werden die Pastenbestandteile in einer Porzellanschale gemischt und anschließend mit einem Dreiwalzwerk dispergiert.

**Tabelle 1**

| | |
|---|---|
| 53 % | Ag-Pulver 332 (Korngröße d₅₀=4 µm, DEMETRON,Hanau) |
| 15 % | Ag-Flake D21 (Partikelgröße: 16 %<4 µm, 50 % < 8 µm, 84 % < 15 µm, DEMETRON, Hanau) |
| 17 % | 1,3-Butandiol |
| 5 % | Glasfritte 10 145 (83 % PbO, 13 % B₂O₃, 2 % SiO₂, Erweichungspunkt 390°C, Cerdec, Frankfurt) |
| 8 % | Wasser |
| 2 % | Polyvinylpyrolidon. |

Diese, dem Stand der Technik entsprechende Paste wird auf Keramiksubstrate (Rubalit 708S, Hoechst Ceramtec) verdruckt. Sie zeigt ein hinsichtlich Verlauf und Konturschärfe gutes Siebdruckverhalten. Nach dem Trocknen bei 110°C erhält man eine wischfeste Schicht. Die Substrate werden bei 600°C gebrannt. Die Leitfähigkeit der Bahnen ist gut.

Die Paste sedimentiert schnell und bildet nach 3-4 Wochen einen festen Bodensatz, der nicht mehr aufgerührt werden kann. Die Paste ist danach unbrauchbar.

Der Anteil flüchtiger organischer Lösungsmittel, die beim Trocknen frei werden beträgt 17 %. Beim Brennen werden weitere 2 % an organischer Substanz freigesetzt.

2. Die Herstellung der folgenden Pasten gemäß der Erfindung erfolgt wie in Beispiel 1.

**Tabelle 2**

| | |
|---|---|
| 61,7 % | Ag-Pulver 3X (Korngröße d₅₀ = 4 µm, DEMETRON, Hanau) |
| 18,4 % | Ag-Flake D21 (Partikelgröße: 16 % < 4 µm, 50 % < 8 µm, 84 % < 15 µm, DEMETRON, Hanau) |
| 8,7 % | 1,3-Butandiol |
| 4,7 % | Wasser |
| 4,0 % | Glasfritte 10 145 (83 % PbO, 13 % B₂O₃, 2 % SiO₂, Erweichungspunkt 390°C, Cerdec, Frankfurt) |
| 2,5 % | Lupasol P, 50 % Polyethylenimin in Wasser (MG: 750 000, BASF, Ludwigshafen) |

Die Paste gemäß Tabelle 2 wird auf Keramiksubstrate (Rubalit 708S, Hoechst Ceramtec) verdruckt. Sie zeigt ein hinsichtlich Verlauf und Konturschärfe sehr gutes Siebdruckverhalten. Nach dem Trocknen bei 110°C erhält man eine wischfeste Schicht. Die Substrate werden bei 600°C gebrannt. Die Leitfähigkeit der Bahnen ist sehr gut.

Die Paste setzt sich nur wenig ab und kann leicht aufgerührt werden. Sie kann danach wieder eingesetzt werden.

Der Anteil flüchtiger organischer Lösungsmittel, die beim Trocknen frei werden beträgt 8,7 %. Beim Brennen werden weitere 1,25 % an organischer Substanz freigesetzt.

3. Die Zusammensetzung dieser Paste ist aus Tabelle 3 ersichtlich.

**Tabelle 3**

| | |
|---|---|
| 59,0 % | Ag-Pulver 3X (Korngröße d₅₀ = 4 µm, DEMETRON, Hanau) |
| 21,8 % | Ag-Flake D21 (Partikelgröße: 16 % < 4 µm, 50 % < 8 µm, 84 % < 15 µm, DEMETRON, Hanau) |
| 14,4 % | 1,3-Butandiol |
| 3,6 % | Glasfritte 10 145 (83 % PbO, 13 % B₂O₃, 2 % SiO₂, Erweichungspunkt 390°C, Cerdec, Frankfurt) |
| 0,72 % | Lupasol P, 50 % Polyethylenimin in Wasser |
| 0,45 % | SC 61 B, 40 % ethoxiliertes Polyethylenimin in Wasser (MG: 40-60 000, BASF, Ludwigshafen) |

Die Paste wird auf Keramiksubstrate (Rubalit 708S, Hoechst Ceramtec) verdruckt. Sie zeigt ein hinsichtlich Verlauf und Konturschärfe sehr gutes Siebdruckverhalten. Nach dem Trocknen bei 110°C erhält man eine wischfeste Schicht. Die Substrate werden bei 600°C gebrannt. Die Leitfähigkeit der Bahnen ist sehr gut.

Die Paste setzt sich nur wenig ab und kann leicht aufgerührt werden. Sie kann danach wieder eingesetzt werden.

Der Anteil flüchtiger organischer Lösungsmittel, die beim Trocknen frei werden beträgt 14,4 %. Beim Brennen werden weitere 0,54 % an organischer Substanz freigesetzt.

4. Die Zusammensetzung der Paste ist aus Tabelle 4 ersichtlich.

**Tabelle 4**

| | |
|---|---|
| 59,5 % | Ag-Pulver 3X (Korngröße d₅₀ = 4 µm, DEMETRON, Hanau) |
| 18,5 % | Ag-Flake D21 (Partikelgröße: 16 % < 4 µm, 50 % < 8 µm, 84 % < 15 µm, DEMETRON, Hanau) |
| 15,5 % | 1,3-Butandiol |
| 4,1 % | Glasfritte 10 145 (83 % PbO, 13 % B₂O₃, 2 % SiO₂, Erweichungspunkt 390°C, Cerdec, Frankfurt) |
| 2,5 % | Lupasol P, 50 % Polyethylenimin in Wasser (MG:750 000, BASF, Ludwigshafen) |

Die Paste wird auf Keramiksubstrate (Rubalit 708S, Hoechst Ceramtec) verdruckt. Sie zeigt ein hinsichtlich Verlauf und Konturschärfe sehr gutes Siebdruckverhalten. Nach dem Trocknen bei 110°C erhält man eine wischfeste Schicht. Die Substrate werden bei 600°C gebrannt. Die Leitfähigkeit der Bahnen ist sehr gut.

Die Paste setzt nur leicht ab und kann leicht aufgerührt werden. Sie kann danach wieder eingesetzt werden.

Der Anteil flüchtiger organischer Lösungsmittel, die beim Trocknen frei werden, beträgt 15,5 %. Beim Brennen werden weitere 1,25 % an organischer Substanz freigesetzt.

5. Eine Paste für die Kantenmetallisierung von Kondensatoren besitzt eine Zusammensetzung gemäß Tabelle 5.

**Tabelle 5**

| | |
|---|---|
| 61,8 % | Ag-Pulver 3X (Korngröße d₅₀ = 4 µm, DEMETRON, Hanau) |
| 17,5 % | Ag-Flake D21 (Partikelgröße: 16 % < 4 µm, 50 % < 8 µm, 84 % < 15 µm, DEMETRON, Hanau) |
| 14,4 % | 1,3-Butandiol |
| 4,1 % | Glasfritte 10 145 (83 % PbO, 13 % B₂O₃, 2 % SiO₂, Erweichungspunkt 390°C, Cerdec, Frankfurt) |
| 2,2 % | Lupasol P, 92,8 % Polyethylenimin in Wasser (MG: 750 000, BASF AG, Ludwigshafen) |

Die Bauteile werden 5 Sekunden lang bis zur erforderlichen Tiefe in die Paste getaucht, langsam wieder herausgezogen und anschließend gewendet. Nach fünfminütigem Trocknen bei 100°C werden die beschichteten Bauteile bei 600°C gebrannt. Man erhält einen gleichförmigen, gut leitfähigen Silberüberzug.

Der Anteil flüchtiger organischer Lösungsmittel, die beim Trocknen frei werden beträgt 14,4 %. Beim Brennen werden weitere 2,04 % an organischer Substanz freigesetzt.

Die Paste setzt nur leicht ab und kann aufgerührt werden. Sie kann danach wieder eingesetzt werden.

## Patentansprüche

1. Paste zur Herstellung von Einbrennschichten, insbesondere in der Mikroelektronik, bestehend aus feinen metallischen und/oder nichtmetallischen Pulvern und einem Bindemittel aus einer wasserlöslichen organischen Polymerverbindung und einem wasserlöslichen organischen Lösungsmittel,
**dadurch gekennzeichnet**,
daß als organische Polymerverbindung ein Polyethylenimin in einer Menge von 0,3 bis 3 Gew.%, bezogen auf das Gesamtgewicht der Paste, eingesetzt wird.

2. Paste nach Anspruch 1,
**dadurch gekennzeichnet**,
daß sie 0,4 bis 0,9 Gew.% Polyethylenimine enthält.

3. Paste nach Anspruch 1 und 2,
**dadurch gekennzeichnet**,
daß sie 8 bis 17 Gew.% Polyalkohole enthält, die bis zu 40 % durch Wasser ersetzt sein können.

## Claims

1. Paste for preparing fired-on layers, in particular in the microelectronics sector, consisting of fine metallic and/or non-metallic powders and a binder of a water-soluble organic polymer and a water-soluble organic solvent,
characterised in that
a polyethylenimine in an amount of 0.3 to 3 wt.%, with reference to the total weight of paste, is used as the organic polymer.

2. Paste according to claim 1,
characterised in that
it contains 0.4 to 0.9 wt.% of polyethylenimine.

3. Paste according to claims 1 and 2,
characterised in that
it contains 8 to 17 wt.% of polyalcohols, up to 40 % of which may be replaced by water.

## Revendications

1. Pâte pour la fabrication de couches aptes à être cuites, en particulier dans la micro-électronique, constituée de fines poudres et/ou non métalliques et d'un liant constitué d'un composé polymère organique soluble dans l'eau et d'un solvant organique soluble dans l'eau,
caractérisée en ce qu'
on utilise comme composé polymère organique un polyéthylènimine en une quantité de 0,3 à 3 % en poids, rapportée au poids total de la pâte.

2. Pâte selon la revendication 1,
caractérisée en ce qu'
elle contient de 0,4 à 0,9 % en poids de polyéthylènimine.

3. Pâte selon les revendications 1 et 2,
caractérisée en ce qu'
elle contient de 8 à 17 % en poids de polyalcools, pouvant être remplacé jusqu'à 40 % par de l'eau.
